Europäisches Patentamt

European Patent Office

Office européen des brevets

(19)

(11) Veröffentlichungsnummer: **0 282 775**
**B1**

# EUROPÄISCHE PATENTSCHRIFT

(12)

(45) Veröffentlichungstag der Patentschrift:
23.05.90

(21) Anmeldenummer: 88102663.7

(22) Anmeldetag: 24.02.88

(51) Int. Cl.⁵: **F16K 31/60, B05B 1/16**

(54) Betätigungsgriff für ein Sanitärventil.

(30) Priorität: 11.03.87 DE 8703609 U

(43) Veröffentlichungstag der Anmeldung:
21.09.88 Patentblatt 88/38

(45) Bekanntmachung des Hinweises auf die Patenterteilung:
23.05.90 Patentblatt 90/21

(84) Benannte Vertragsstaaten:
AT CH DE FR GB IT LI NL SE

(56) Entgegenhaltungen:
EP-A- 0 001 302
DE-A- 3 040 627
GB-A- 1 033 185

(73) Patentinhaber: Hans Grohe GmbH & Co. KG,
Auestrasse 9, D-7622 Schiltach(DE)

(72) Erfinder: Flieger, Horst, Hans Grohe Strasse 64,
D-7622 Schiltach(DE)

(74) Vertreter: Patentanwälte Ruff und Beier,
Neckarstrasse 50, D-7000 Stuttgart 1(DE)

**Beschreibung**

Die Erfindung betrifft einen Betätigungsgriff für einen Sanitärgegenstand, insbesondere ein Ventil, der zur Betätigung einer Ventileinrichtung in mindestens einer Richtung bewegbar an dem Ventil gehaltert ist.

Bei Mischventilen oder einfachen Ventilen sind Drehgriffe bekannt, die üblicherweise einen dreieckigen, viereckigen oder sternartigen Querschnitt aufweisen (GB-A 1 033 185). Dieses Abweichen vom runden Querschnitt wird gewählt, um mit nassen oder seifigen Händen nicht am Griff abzurutschen. Üblicherweise sind die Schalen dieser Griffe aus Kunststoff einstückig hergestellt. An Mischventilen sind ebenfalls Zuggriffe vorhanden, mit denen der Abfluß eines Waschbeckens geöffnet oder geschlossen werden kann. Hier kann eine im Querschnitt kreisrunde Form gewählt werden, da diese Griffe in der Regel gezogen oder gedrückt werden.

Es ist bei Rasierapparaten bekannt, an der Innenseite eines Gehäuses eine Folie anzubringen, die mit einzelnen Noppen durch Löcher in dem Gehäuse nach außen vorspringt und dort etwas über die Oberfläche übersteht. Damit soll die Grifffähigkeit verbessert und ein durch Verbiegen der Folie nach innen betätigbarer Schalter geschaffen werden (EP-B1-1302).

Der Erfindung liegt die Aufgabe zugrunde, einen Betätigungsgriff für einen Sanitärgegenstand zu schaffen, der es ermöglicht, daß der Designer eine größere Freiheit in der Auswahl von Formen, Farben und Farbzusammenstellungen hat als es bisher möglich ist und bei dem sich die Gebrauchsfähigkeit des Griffs verbessern lassen soll.

Zur Lösung dieser Aufgabe ist erfindungsgemäß vorgesehen, daß der Betätigungsgriff eine äußere hohle, mit Öffnungen versehene Schale aufweist, in deren Öffnungen Ansätze angeordnet sind. Die Außenkante des Ansatzes reicht mindestens bis etwa in die Oberfläche der Außenseite der Außenschale. Sie kann ggf. mehr oder weniger weit über diese vorstehen.

Die an der Außenseite des Griffs sichtbaren Vorsprünge können sich in der Farbe, in dem Material oder in der Form von der Oberfläche der Schale unterscheiden. Sie können daher optische Anreize bieten, so daß trotz einfacher Herstellung Farbkombinationen und dadurch mögliche Effekte bewirkt werden können. Die Ansätze können insbesondere eine Profilierung der Oberfläche ermöglichen, so daß der Designer von der bekannten vieleckigen Form abweichen kann und runde Formen wählen kann, die ihm bisher nicht zur Verfügung standen. So kann insbesondere vorgesehen sein, daß die Schale eine glatte Oberfläche aufweist und die Ansätze Profilierungen bilden, vorzugsweise selbst Profilierungen aufweisen. Profilierungen können auch durch das Abwechseln von Ansätzen und Schale gebildet sein.

In Weiterbildung kann vorgesehen sind, daß die Ansätze an einer oder mehreren Einlagen ausgebildet sind, die an der Innenseite der Schale anliegt und deren Form entsprechen kann. Insbesondere sind die Ansätze einstückig mit der Einlage.

In Weiterbildung kann vorgesehen sein, daß die Einlage bzw. mindestens deren Ansätze aus einem gummiartigen Material besteht. Dadurch kann der Benutzer an einer Oberfläche angreifen, die abwechselnd aus dem Material der Außenschale und dem gummiartigen Material der Ansätze gebildet ist, so daß er ein angenehmes Griffgefühl hat. Das gummiartige Material ist besonders günstig gegen Abrutschen.

In Weiterbildung kann zur einfachen Herstellung vorgesehen sein, daß die Einlage zwischen der äußeren Schale und einer inneren Hülse angeordnet, insbesondere festgelegt ist. Die Innenhülse kann einfach eingeschoben und mit der Außenschale in irgendeiner Weise befestigt sein, wobei bei der Verwendung von gummiartigem Material diese Befestigung auch durch einen strammen Sitz erreicht werden kann.

Mit Vorteil ist es auch möglich, die Ansätze in die Öffnungen der Schale einzuspritzen. Insbesondere kann die Einlage in einen Zwischenraum zwischen der Innenhülse und der Außenschale eingespritzt werden. Dadurch kann eine formschlüssige Verbindung zwischen Außenschale, Einlage und Innenhülse erreicht werden, ohne daß zur Herstellung auf der Innenseite des Betätigungsgriffs eine spezielle Form erforderlich zu sein braucht.

Beispielsweise können mit Vorteil die Öffnungen schmale lange Schlitze sein, die sich vorzugsweise in Bewegungsrichtung des Betätigungsgriffs erstrecken. Sie verbessern nicht nur die Griffigkeit, sondern geben auch eine gewisse optische Anzeige der Betätigungsrichtung des Griffs.

Wenn das Material der Einlage dazu dienen soll, die Griffigkeit des Griffes zu verbessern, kann erfindungsgemäß vorgesehen sein, daß die Ansätze der Einlage nur etwas über die Oberfläche der Außenseite der Außenschale vorstehen. Dies ist insbesondere bei der Verwendung von gummiartig-elastischem Material sinnvoll.

Es ist aber auch möglich, daß die Ansätze selbst profiliert sind oder, ggf. zusammen mit der Schale, Profilierungen bilden. Dann kann das Material der Einlage und/oder von deren Ansätzen aus anderem geeigneten Material bestehen, beispielsweise auch aus dem gleichen Material wie die Schale.

In Weiterbildung kann vorgesehen sein, daß der Griff ein Drehgriff ist und sich die Schlitze über knapp die Hälfte des Umfangs erstrecken, wobei zwei Sätze von Schlitzen vorgesehen sind. Die Einlage kann in diesem Fall zwar auch aus einem einzigen Stück bestehen, das sich über den gesamten Umfang auf der Innenseite des Griffs erstreckt. Zur Verbesserung der Montage ist es jedoch vorzuziehen, die Einlage aus zwei oder mehr Halbstücken herzustellen.

Erfindungsgemäß kann zur Befestigung des Betätigungsgriffes an einem Ventil, insbesondere an den bestehenden Ventilen, vorgesehen sein, daß an der Innenhülse eine Schnappeinrichtung o.dgl. zur Befestigung des Betätigungsgriffs an der Spindel des Ventils vorgesehen ist. Damit kann der von der Erfindung vorgeschlagene Betätigungsgriff auch bei bestehenden Ventilen gegen die derzeit üblichen Griffe ausgetauscht werden.

Zur Erleichterung der Montage kann vorgesehen sein, daß die Ansätze und/oder die Öffnungen derart dimensioniert sind, daß die Einlage klemmend festgelegt wird.

Die Erfindung läßt sich nicht nur bei Drehgriffen für Mischventile anwenden, sondern beispielsweise auch als Betätigungselement an einem Brausekopf zum Umstellen verschiedener Strahlarten. In diesem Fall ist die Außenschale als etwa zylindrischer Ring ausgebildet, an dem sich die Öffnungen als ggf. unterbrochene Schlitze in Umfangsrichtung erstrecken. Die Einlage kann als ein- oder mehrteiliger zylindrischer Ring ausgebildet sein.

Es ist ebenfalls möglich, daß die Ansätze der Einlage nicht nur etwas, sondern weit aus der Außenschale herausragen. Beispielsweise kann die Außenschale drei oder vier relativ große, ggf. etwa kreisförmige Löcher aufweisen, aus denen die Ansätze beispielsweise etwa in Form einer Halbkugel herausragen, d.h. mindestens um den Betrag ihres eigenen Radius. Auf diese Weise kann ein mehrflügliger Betätigungsgriff relative einfach hergestellt werden, dessen Einzelteile sich sehr leicht herstellen und verbinden lassen. In diesem Fall kann zur Erleichterung der Montage vorgesehen sein, daß für jedes Loch eine eigene Einlage vorgesehen ist.

Weitere Merkmale, Einzelheiten und Vorzüge der Erfindung ergeben sich aus der folgenden Beschreibung bevorzugter Ausführungsformen der Erfindung sowie anhand der Zeichnung. Hierbei zeigen:

Fig. 1 eine zur Hälfte geschnittene Seitenansicht eines Drehknopfes für ein Ventil nach einer ersten Ausführungsform;

Fig. 2 eine die Fig. 1 entsprechende Ansicht bei einer zweiten Ausführungsform;

Fig. 3 eine Ansicht der Ausführungsform nach Fig. 1 von unten bei weggelassener Innenhülse;

Fig. 4 eine der Fig. 1 entsprechende Seitenansicht bei einer dritten Ausführungsform;

Fig. 5 einen Querschnitt durch einen Brauseknopf mit einem Betätigungsgriff nach einer weiteren Ausführungsform.

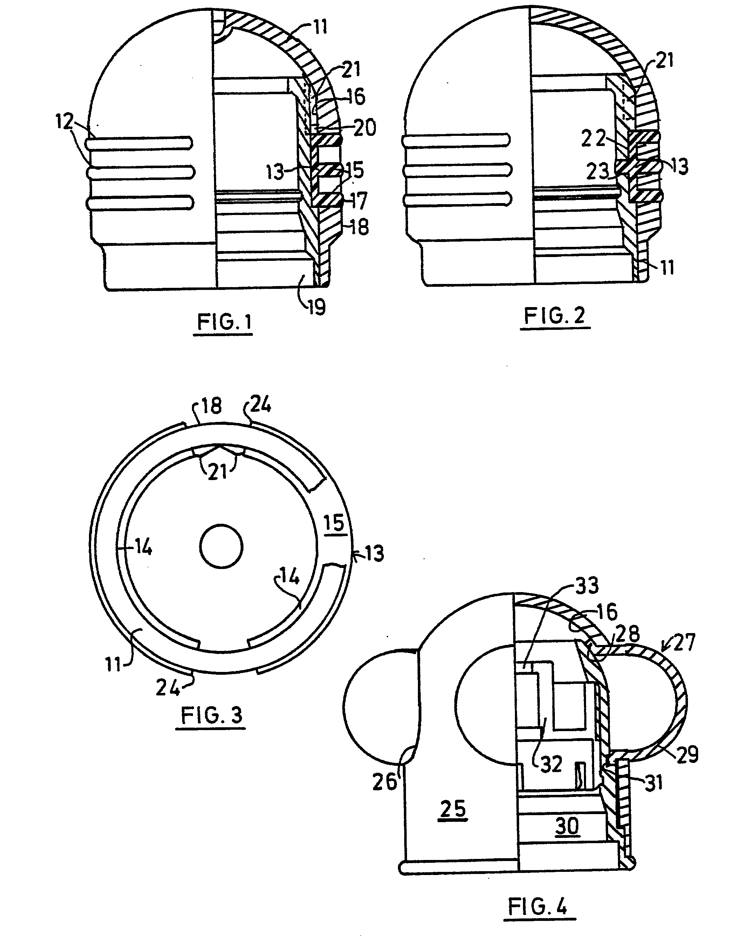

Der in Fig. 1 dargestellte Drehgriff für ein Mischventil weist eine Außenschale 11 auf, die etwa die Form eines halbkugelförmig einseitig abgeschlossenen geraden Kreiszylinders annimmt. In der Zylinderwandung sind insgesamt sechs Schlitze 12 eingelassen, wobei jeder Schlitz sich über etwas weniger als die Hälfte des Umfangs erstreckt, so daß zwei Gruppen von jeweils drei Schlitzen 12 gebildet sind, die in axialer Richtung hintereinander angeordnet sind. Alle Schlitze verlaufen in Umfangsrichtung und erstrecken sich über die gleiche Umfangslänge an der gleichen Stelle des Umfangs. Jeder Schlitz liegt in einer senkrecht zur Zylinderachse verlaufenden Ebene.

Von der Innenseite der Schale 11 her ist eine bogenförmige Einlage 13 eingebracht, die dem Krümmungsradius des zylindrischen Abschnittes der Außenschale 11 entspricht. Die Einlage ist von einer an der Innenseite der Krümmung angeordneten gebogenen Platte 14 gebildet, die an ihrer Außenseite drei rippenartige Ansätze 15 aufweist. Die Ansätze 15 entsprechen in ihrer Breite, Länge und Anordnung den entsprechenden Abmessungen der Schlitze 12, so daß die Einlage 13 derart in das Innere der Außenschale 11 eingesetzt werden kann, daß die Ansätze 15 in die Schlitze 12 eingreifen. Bei bündig an der Innenseite 16 der Außenschale anliegender Einlage 13 ragen die leicht abgerundeten Außenkanten 17 der Vorsprünge 15 gerade etwas über die Oberfläche 18 der Außen schale 11 vor. Der Aufteilung der Schlitze 12 in zwei Gruppen folgend sind zwei derartige, identisch ausgebildete Einlagen 13 vorhanden.

Nach Einsetzen der beiden Einlagen 13 ist in das Innere der Außenschale 11 eine Hülse 19 eingeschoben, deren Außendurchmesser in ihrem unteren Bereich dem Innendurchmesser der Außenschale 11 entspricht. Im oberen Bereich ist der Durchmesser der Innenhülse 19 etwa zurückgesetzt, so daß dadurch ein Zwischenraum 20 entsteht, dessen Dicke etwa der Dicke der Platte 14 der Einlagen 13 entspricht. Die Einlage 13 besteht vorzugsweise aus einem gummielastischen oder gummiartigen Material, so daß bei entsprechender Dimensionierung des Zwischenraumes 20 die Innenhülse 19 in axialer Richtung kraftschlüssig festgelegt ist. Da mit dem Griff eine Drehbewegung durchgeführt werden soll, enthält die Innenseite 16 im Bereich zwischen der Einlage 13 und der Krümmung der Außenschale 11 eine Verzahnung 21, die mit einer entsprechenden Verzahnung an der Außenseite der Innenhülse 19 in diesem Bereich zusammenwirkt.

Die Innenkontur der Innenhülse 19 ist derart gewählt, daß sie auf die Spindel eines Drehventils aufschnappbar ist, so daß sich der Drehgriff relativ einfach auf die Drehspindel aufsetzen läßt. Zur Übertragung der Drehbewegung ist an der Innenseite der Innenhülse 19 vorzugsweise eine Verzahnung oder eine sonstige Anordnung angeordnet, die im einzelnen nicht dargestellt ist.

Die drei Ansätze 15 sind, wie man aus der linken Hälfte der Fig. 1 ersieht, von der Außenseite her sichtbar und fühlbar, da sie etwas überstehen. Sie geben eine optische Anzeige dafür, daß der Knopf in Umfangsrichtung gedreht werden soll, darüber hinaus verbessern sie die Griffigkeit aufgrund des gummiartigen Materials.

Bei der Anordnung der Fig. 2 ist die Außenschale im wesentlichen genauso aufgebaut wie bei der Anordnung der Fig. 1. Zwischen der Innenhülse und der Außenschale besteht im oberen Trennbereich wiederum eine Verzahnung 21, so daß die Drehverbindung gewährleistet ist. Die Außenseite der Innenhülse 19 besitzt in diesem Fall jedoch eine sich über den Umfang erstreckende Flachnut 22, die entweder über den gesamten Umfang durchgehend ausgebildet sein kann oder nur über den Bereich der Schlitze 12. Diese Nut 22 reicht in axialer Richtung von der Unterkante des ersten Schlitzes 12 bis zu der gegenüberliegenden Oberkante des letzten Schlitzes. Die axiale Erstreckung der Nut 22 könnte auch etwas größer sein.

Von der Innenseite der Innenhülse 19 her ist mindestens eine Öffnung 23 vorhanden, die in die Nut 22 führt. Bei der Herstellung wird zunächst die Innenhülse 19 in die Außenschale 11 eingeschoben, bis sie die dargestellte Lage erreicht hat. Dann wird von der Innenseite der Innenhülse 19 her durch die Öffnung 23 das Material der Einlage 13 eingespritzt, wobei die äußere Begrenzung an der Außenseite der Außenschale 11 durch eine entsprechende Gegenform sichergestellt wird. Nach Aushärten der Einlage 13 verriegelt diese die Innenhülse 19 in axialer Richtung. Bei dieser Ausführungsform kann eine oder auch mehrere Einlagen 13 in gespritzter Form vorhanden sein.

Fig. 3 zeigt eine Untenansicht der Anordnung in Fig. 1 bei entfernter Innenhülse 19. Es ist zu sehen, daß zwei Einlagen 13 vorhanden sind, die sich über einen Umfangswinkel von etwa 165° erstrecken. Auf der Innenseite der Außenschale 11 ist die die Grundlage der Einlage 13 bildende Platte 14 angeordnet, die gleichzeitig das Herausrutschen der Einlage 13 nach außen verhindert. Die Ansätze 15 erstrecken sich durch die Schlitze 12 hindurch und ihre Außenkontur 17 steht etwas über die Außenseite 18 der Außenschale vor. Die drei Schlitze 12 bzw. drei Ansätze 15 jeder Einlage 13 sind axial hintereinander angeordnet, so daß aus der Ansicht der Fig. 3 jeweils nur die beiden ersten Ansätze beider Einlagen 13 zu sehen sind. An den Enden der Einsätze 15 in Umfangsrichtung sind leichte ggf. ebenfalls abgerundete Kanten 24 gebildet, die ebenfalls eine Rutschsicherung für den Benutzer darstellen.

Fig. 4 zeigt eine der Fig. 1 und 2 entsprechende Seitenansicht eines weiteren Drehgriffs. Der Drehgriff enthält eine Außenschale 25, die ebenfalls etwa die Form eines geraden Kreiszylinders aufweist, der halbkugelförmig abgeschlossen ist. Die Außenschale 25 weist insgesamt vier jeweils um 90° um die Rotationssymmetrieachse der Außenschale 25 gleichmäßig verteilt angeordnete Öffnungen 26 auf, die etwa kreisrund ausgebildet sind. Im Verhältnis zur Größe der Außenschale 25 sind die Öffnungen 26 relativ groß ausgebildet.

Von der Innenseite der Außenschale 25 her ist in jede Öffnung 26 eine Einlage 27 eingesetzt, die etwa die Form einer Halbkugel aufweist. Jede Einlage 27 ist mit einem Randabschnitt 28 versehen, mit dem sie an der Innenseite 16 der Außenschale 25 anliegt. Der halbkugelförmige Ansatz 29 jeder Einlage 27 springt weit über die Oberfläche der Außenschale 25 vor, etwa um den eigenen Radius.

Verriegelt sind die vier Einlagen 27 dadurch, daß in die Innenseite der Außenschale 25 eine Innenhülse 30 eingeschoben bzw. eingesetzt ist, die an den Randabschnitten 28 jeder Einlage 27 klemmend angreift und diese gegen die Innenseite 16 der Außenhülse 25 drückt. Die Innenhülse 30 enthält eine Nut 31, in die ein Teil des Randabschnittes 28 der Einlage 27 einrastet. In die Innenseite der Innenhülse 30 ist ein weiterer Einsatz 32 eingesetzt, der in seiner Mittelachse eine Vierkant-Öffnung 33 zur Aufnahme einer Drehspindel für ein Ventil enthält.

Bei dem Drehgriff der Fig. 4 sind die Ansätze 29 der vier Einlagen 27 nicht aus gummiartigem, sondern aus einem festeren Material gebildet. Sie können beispielsweise eine von der Farbe der Außenschale 25 verschiedene Farbe haben.

Die vier Ansätze sind aus relativ starrem Material gebildet und innen hohl. Damit soll ein Griff gebildet werden, der in der Art der Bedienung und Aussehen bekannten, bisher einstückig hergestellten Griffen ähnlich ist. Es wäre jedoch ebenfalls denkbar, derartige Ansätze aus Gummi herzustellen, wenn z.B. die Oberflächeneigenschaften von Gummi gewünscht sind. Die Ansätze könnten auch aus Vollmaterial sein.

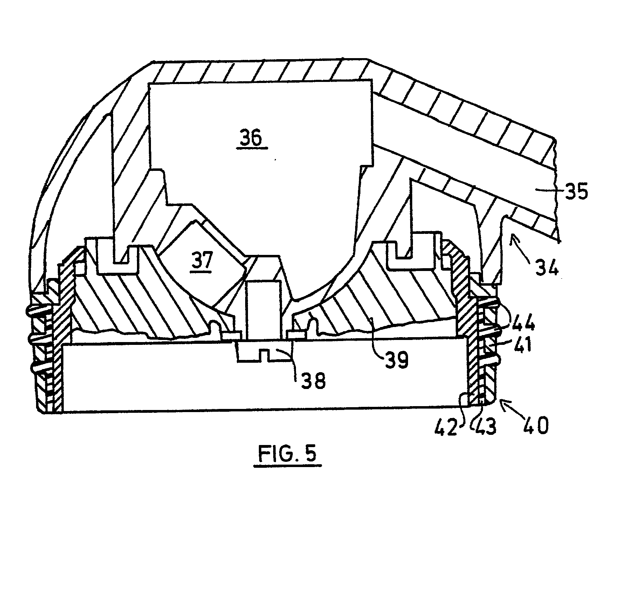

Fig. 5 zeigt in stark vereinfachter Darstellung einen Querschnitt durch einen Brausekopf 34, bei dem nähere Einzelheiten weggelassen sind. In den Brausekopf 34 strömt Wasser durch eine Leitung 35 in den zentralen Innenraum 36. Von diesem aus führt eine seitliche Öffnung 37 in den eigentlichen Brausekörper. Um eine zentrale Schraube 38 verdrehbar gehaltert ist ein im einzelnen nicht dargestelltes Bauteil 39, das in unterschiedlichen Stellungen Wasser zu verschiedenen Brauseeinrichtungen führt. Zur Verdrehung des Bauteils 39 ist ein äußerer Betätigungsgriff 40 vorgesehen. Dieser enthält eine Außenschale 41, die etwa die Form eines Flachzylinders aufweist. Innerhalb der Außenschale 41 ist konzentrisch zu dieser eine Innenhülse 42 angeordnet, die ebenfalls die Form eines flachen Kreiszylinders aufweist. Die Innenhülse 42 ist mit dem zu verdrehenden Bauteil 39 verbunden. In dem dem Brausekörper zugewandten Bereich sind Innenhülse 42 und Außenschale 41 miteinander verbunden, während sie im übrigen Bereich einen Zwischenraum aufweisen, der durch eine Einlage 43 ausgefüllt ist. Die Einlage 43 besteht wiederum aus einem anderen, vorzugsweise aus gummiartigem Material und greift mit Ansätzen 44 durch entsprechende Schlitze der Außenschale 41 hindurch. Die Dimensionierung ist ähnlich gewählt wie bei der Ausführungsform der Fig. 1, so daß die Außenkonturen etwas abgerundet sind und nur etwas vorstehen. Die Herstellung der Einlage kann in ähnlicher Weise geschehen wie bei der Ausführungsform nach Fig. 1, aber auch wie bei der Ausführungsform nach Fig. 2. Über den Umfang gesehen kann die Einlage 43 wiederum aus zwei oder auch aus mehreren Einzelteilen bestehen, die eine ähnliche Form aufweisen wie aus Fig. 3 zu sehen. Auch hier dienen die an der Außenseite der Außenschale 41 vorstehenden Ansätze 44 zur Verbesserung der Griffigkeit und ggf. auch ästhetischen Gründen. Wiederum verlaufen die Ansätze 44 als schmale Rippen in Umfangsrichtung um den Brausekopf herum, dessen Achse durch die Schraube 38 gebildet wird.

Während bei der Ausführungsform nach Fig. 1 bis 3 und 5 die Ansätze in Form von Rippen in Drehrichtung um das Griffelement herumlaufen, wäre es ebenfalls möglich, sie quer zur Drehrichtung, also axial verlaufen zu lassen. In diesem Fall würde man mehr und kürzere Schlitze verwenden.

Auch bei Verwendung der Erfindung bei einem Zugknopf wären beide Anordnungen möglich.

**Patentansprüche**

1. Betätigungsgriff für einen Sanitärgegenstand, insbesondere ein Sanitärventil, der in mindestens einer Richtung bewegbar an dem Gegenstand gehalten ist, dadurch gekennzeichnet, daß er eine äußere hohle, mit Öffnungen (12, 26) versehene Schale (11, 25, 41) aufweist, in deren Öffnungen (12, 26) Ansätze (15, 29, 44) angeordnet sind, deren Außenkanten (17) bis mindestens etwa in die Oberfläche der Außenseite der Außenschale (11, 25, 41) reichen.

2. Betätigungsgriff nach Anspruch 1, dadurch gekennzeichnet, daß die Ansätze (15, 29, 44) vorzugsweise einstückig an mindestens einer an der Innenseite der Schale (11, 25, 41) anliegenden Einlage (13, 27, 43) ausgebildet sind.

3. Betätigungsgriff nach Anspruch 1 oder 2, dadurch gekennzeichnet, daß die Ansätze (15, 29, 44) aus einem anderen Material als die Schale (11, 25, 41) bestehen, insbesondere aus einem gummiartigen Material.

4. Betätigungsgriff nach Anspruch 2 oder 3, dadurch gekennzeichnet, daß die Einlage (13, 27, 43) zwischen der äußeren Schale (11, 25, 41) und einer inneren Hülse (19, 30, 42) angeordnet, insbesondere festgelegt ist.

5. Betätigungsgriff nach einem der Ansprüche 2 bis 4, dadurch gekennzeichnet, daß die Ansätze (15, 29, 44) in die Öffnungen (12, 26) der Schale (11, 41), vorzugsweise von deren Innenseite her, und/oder die Einlage (13) in einen Zwischenraum zwischen der Innenhülse (19, 42) und der Außenschale (11, 25, 41) eingespritzt ist.

6. Betätigungsgriff nach einem der vorhergehenden Ansprüche, dadurch gekennzeichnet, daß die Öffnungen schmale lange Schlitze (12) sind, die sich vorzugsweise in Bewegungsrichtung des Betätigungsgriffs erstrecken und ggf. unterbrochen sind.

7. Betätigungsgriff nach einem der vorhergehenden Ansprüche, dadurch gekennzeichnet, daß die Ansätze (15, 44) der Einlage (13, 43) nur gering über die Oberfläche der Außenseite der Außenschale (11, 41) vorstehen.

8. Betätigungsgriff nach einem der vorhergehenden Ansprüche, dadurch gekennzeichnet, daß er ein Drehgriff ist und sich die Schlitze (12) über knapp die Hälfte des Umfangs erstrecken, wobei zwei Sätze von Schlitzen (12) und ggf. zwei Einlagen (13) vorgesehen sind.

9. Betätigungsgriff nach einem der vorhergehenden Ansprüche, dadurch gekennzeichnet, daß an der Innenhülse (19, 30) eine Schnappeinrichtung o.dgl. zur Befestigung des Betätigungsgriffs an der Spindel des Ventils vorgesehen ist.

10. Betätigungsgriff nach einem der vorhergehenden Ansprüche, dadurch gekennzeichnet, daß die Ansätze (15, 29, 44) und/oder die Öffnungen (12, 26) derart dimensioniert sind, daß die Einlage (13, 27, 43) klemmend festgelegt ist.

11. Betätigungsgriff nach einem der vorhergehenden Ansprüche für einen Brausekopf (34), dadurch gekennzeichnet, daß er als Drehring ausgebildet ist, wobei die Außenschale (41) als etwa zylindrischer Ring ausgebildet ist und sich die Ansätze (44) in Umfangsrichtung erstrecken.

12. Betätigungsgriff nach einem der vorhergehenden Ansprüche, dadurch gekennzeichnet, daß er ein Drehgriff ist, die Öffnungen (26) über den Umfang verteilte Löcher sind und die Ansätze (29) als Vorsprünge deutlich über die Außenseite der Schale (25) vorspringen, wobei insbesondere die Löcher etwa kreisrund und die Vorsprünge etwa halbkugelförmig ausgebildet sind und vorzugsweise für jedes Loch (26) eine eigene Einlage (27) vorgesehen ist.

## Claims

1. Operating grip for a sanitary member, particularly a sanitary valve, which is movably held on the object in at least one direction, characterized in that it has an outer, hollow shell (11, 25, 41) provided with openings (12, 26), in which are arranged attachments (15, 29, 44), whose outer edges (17) extend at least approximately into the surface of the outside of the outer shell (11, 35, 41).

2. Operating grip according to claim 1, characterized in that the attachments (15, 29, 44) are constructed. preferably in one piece, with at least one insert (13, 27, 43) engaging on the inside of shell (11, 25, 41).

3. Operating grip according to claims 1 or 2, characterized in that the attachments (15, 29, 44) are made from a different material to shell (11, 25, 41), particularly a rubbery material.

4. Operating grip according to claims 2 or 3, characterized in that the insert (13, 27, 43) is arranged between the outer shell (11, 25, 41) and an inner sleeve (19, 30, 43), particularly by fixing.

5. Operating grip according to one of the claims 2 to 4, characterized in that the attachments (15, 29, 44) are injection moulded into the openings (12, 26) of shell (11, 41), preferably from the inside thereof and /or the insert (13) is injection moulded into a cavity between the inner sleeve (19, 42) and the outer shell (11, 25, 41).

6. Operating grip according to one of the preceding claims, characterized in that the openings are long, narrow slits (12), which preferably extend in the movement direction of the operating grip and are optionally interrupted.

7. Operating grip according to one of the preceding claims, characterized in that the attachments (15, 44) of insert (13, 43) only project slightly over the surface of the outside of outer shell (11, 41).

8. Operating grip according to one of the preceding claims, characterized in that it is a rotary grip and the openings (12, 26) extend over just half the circumference, there being two sets of openings (12) and optionally two inserts (13).

9. Operating grip according to one of the preceding claims, characterized in that on the inner sleeve (19, 30) is provided a snap mechanism or the like for fixing the operating grip to the valve spindle.

10. Operating grip according to one of the preceding claims, characterized in that the attachments (15, 29, 44) and/or openings (12, 26) are dimensioned in such a way that the insert (13, 27, 43) is fixed by jamming.

11. Operating grip according to one of the preceding claims for a shower head (34), characterized in that it is constructed as a rotary ring, the outer shell (41) being constructed as a roughly cylindrical ring and the attachments (44) extend circumferentially.

12. Operating grip according to one of the preceding claims, characterized in that it is a rotary grip, the openings (26) are circumferentially distributed holes and the attachments (29) project as projections well above the outside of shell (25) and in particular the holes are roughly circular and the projections are roughly hemispherical and preferably an individual insert (27) is provided for each hole (26).

## Revendications

1. Poignée de manœuvre pour un objet sanitaire, en particulier pour un robinet d'appareil sanitaire, qui est maintenue mobile suivant au moins une direction sur l'objet, caractérisée en ce qu'elle présente une coquille externe creuse (11, 25, 41) pourvue d'ouvertures (12, 26), dans les ouvertures (12, 26) de laquelle sont disposées des saillies (15, 29, 44) dont les côtés extérieurs (17) s'étendent au moins à peu près jusque dans la surface du côté extérieur de la coquille externe (11, 25, 41).

2. Poignée selon la revendication 1, caractérisée en ce que les saillies (15, 29, 44) sont formées, de préférence d'un seul tenant, sur au moins une pièce insérée (13, 27, 43), appliquée contre le côté intérieur de la coquille (11, 25, 41).

3. Poignée selon la revendication 1 ou 2, caractérisée en ce que les saillies (15, 29, 44) sont faites d'un autre matériau que la coquille (11, 25, 41), en particulier d'un matériau caoutchouteux.

4. Poignée selon la revendication 2 ou 3, caractérisée en ce que la pièce insérée (13, 27, 43) est disposée, en particulier bloquée entre la coquille externe (11, 25, 41) et un manchon intérieur (19, 30, 42).

5. Poignée selon une des revendications 2 à 4, caractérisée en ce que les saillies (15, 29, 44) sont formées par moulage par injection dans les ouvertures (12, 26) de la coquille (11, 41), de préférence à partir du côté intérieur de la coquille, et/ou la pièce insérée (13) est formée par moulage par injection dans un intervalle entre le manchon intérieur (19, 42) et la coquille externe (11, 25, 41).

6. Poignée selon une des revendications précédentes, caractérisée en ce que les ouvertures sont des fentes étroites et longues (12) qui s'étendent de préférence dans la direction de mouvement de la poignée et sont éventuellement interrompues.

7. Poignée selon une des revendications précédentes, caractérisée en ce que les saillies (15, 44) de la pièce insérée (13, 43) dépassent de peu seulement de la surface du côté extérieur de la coquille externe (11, 41).

8. Poignée selon une des revendications précédentes, caractérisée en ce qu'elle est une poignée tournante et que les fentes (12) s'étendent sur un peu moins que la moitié du pourtour, avec prévision de deux séries de fentes (12) et, éventuellement, deux pièces insérées (13).

9. Poignée selon une des revendications précédentes, caractérisée en ce qu'un dispositif d'encliquetage ou analogue pour la fixation de la poignée sur l'axe d'un robinet, est prévu sur le manchon intérieur (19, 30).

10. Poignée selon une des revendications précédentes, caractérisée en ce que les saillies (15, 29, 44) et/ou les ouvertures (12, 26) sont dimensionnées de manière que la pièce insérée (13, 27, 43) soit bloquée par serrage.

11. Poignée selon une des revendications précédentes pour une pomme de douche (34), caractérisée en ce qu'elle est réalisée comme une bague rotative avec une coquille externe (41) ayant à peu près la forme d'une bague cylindrique et avec des saillies (44) s'étendant dans le sens circonférentiel.

12. Poignée selon une des revendications précédentes, caractérisée en ce qu'elle est une poignée tournante, les ouvertures (26) étant des trous répartis sur le pourtour et les saillies (29) dépassent nettement du côté extérieur de la coquille (25), les trous étant notamment de forme à peu près circulaire et les saillies étant à peu près hémisphériques, avec, de préférence, prévision d'une pièce insérée (27) particulière pour chaque trou (26).

FIG.1

FIG.2

FIG.3

FIG.4

FIG. 5